# FASCICULE DE BREVET EUROPEEN

(11) **EP 0 963 515 B1**
(45) Date de publication et mention de la délivrance du brevet: **03.03.2004**
(21) Numéro de dépôt: 97952985.6
(22) Date de dépôt: 23.12.1997
(51) Int. Cl.: F02K 9/95

(54) **ALLUMEUR ACOUSTIQUE ET PROCEDE D'ALLUMAGE POUR MOTEUR-FUSEE A ERGOLS LIQUIDES**
AKUSTISCHER ANZÜNDER UND VERFAHREN ZUM ZÜNDEN EINES FLÜSSIGTREIBSTOFFGETRIEBENEN RAKETENMOTORS
ACOUSTIC IGNITER AND IGNITION METHOD FOR PROPELLANT LIQUID ROCKET ENGINE

(43) Date de publication de la demande: 15.12.1999
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: KESSAEV, Khoze, Moscou, 123423 (RU); ZINOVIEV, Vassili, Moscou, 103055 (RU); DEMTCHENKO, Vladimir, Moscou, 127474 (RU)
(74) Mandataire: Thévenet, Jean-Bruno
(86) Numéro de dépôt international: PCT/FR1997/002392
(87) Numéro de publication internationale: WO 1999/034105

(56) Documents cités:
- SU-A- 1 537 967
- US-A- 3 630 151
- US-A- 3 811 359
- US-A- 3 982 488
- US-A- 5 109 669
- L.STABINSKY: "ANALITICAL AND EXPERIMENTAL STUY OF RESONANCE IGNITION TUBES" NASA CR136934, 1 décembre 1973, pages 13-39, XP002075437

## Description

### Domaine de l'invention.

La présente invention a pour objet un allumeur acoustique et un procédé d'allumage d'un mélange d'ergols dans la chambre de combustion d'un moteur-fusée à ergols liquides.

### Art antérieur.

On connaît déjà divers types d'allumeurs acoustiques utilisés dans le domaine spatial pour l'allumage de mélanges d'ergols alimentant la chambre de combustion d'un moteur-fusée à ergols liquides.

Ainsi, le document de Brevet SU-A-1 255 818 décrit déjà un exemple d'allumeur acoustique qui est représenté sur la figure 2. Dans un tel allumeur acoustique, une chambre cylindrique 1 de précombustion comporte sur l'une de ses faces principales une tuyère d'injection 3 à l'intérieur de laquelle est placé un injecteur 4 d'alimentation en ergol combustible, lequel injecteur 4 est placé selon l'axe de la tuyère d'injection 3. Un résonateur acoustique 5 creux est placé à travers la seconde face principale de la chambre de précombustion 1, en regard de la tuyère d'injection 3. Le résonateur acoustique 5 comporte une première partie tronconique convergente à partir de l'ouverture d'entrée et une deuxième partie cylindrique de manière à définir une cavité qui se termine par une paroi de fond de la partie cylindrique. Des orifices de sortie 2 de la chambre de précombustion 1 permettent le passage du mélange enflammé après allumage vers une chambre aval 11 qui communique par au moins un orifice de sortie 21 avec une chambre de combustion principale d'un moteur-fusée.

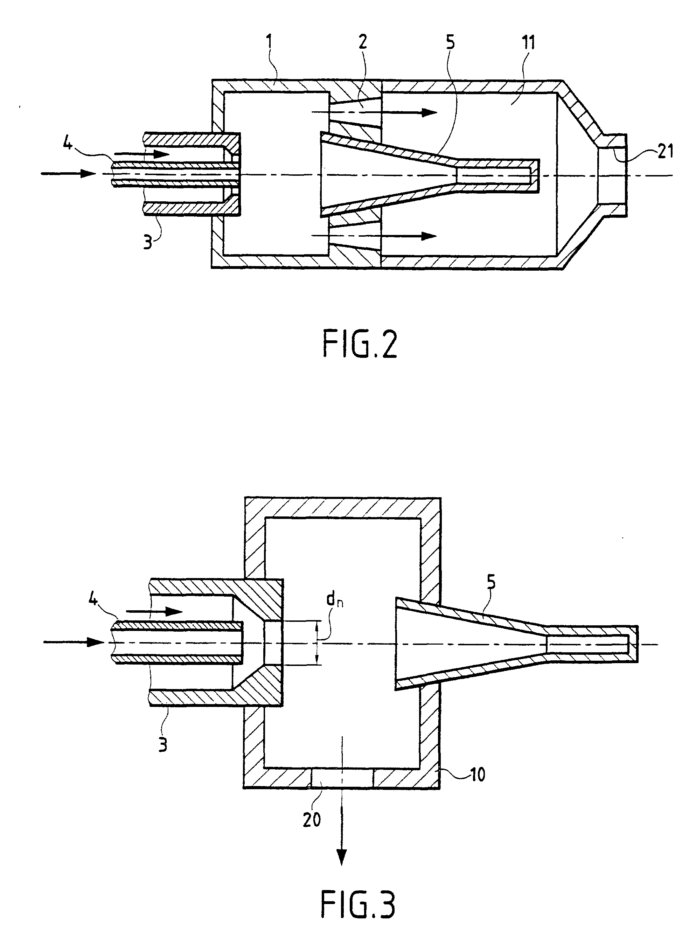

Le fonctionnement d'un allumeur acoustique tel que celui représenté sur la figure 2 fonctionne de la manière suivante : un composant gazeux, par exemple un oxydant, est introduit sous pression dans la tuyère d'injection 3 et subit une accélération. Dans le même temps, un autre composant, le combustible, est introduit dans l'injecteur 4. L'ensemble de la tuyère d'injection 3 et de l'injecteur 4 assure ainsi la formation d'un mélange d'ergols dans la chambre de précombustion 1. Une partie du mélange pénètre dans la cavité du résonateur acoustique 5 et y demeure. Les ondes de choc créées provoquent l'échauffement de la partie du mélange située dans le résonateur acoustique 5. Le mélange prend feu lorsqu'il a atteint la température d'allumage. La flamme sort de la cavité du résonateur acoustique, provoque l'allumage de tout le mélange dans la chambre de précombustion 1, puis s'échappe par les orifices de sortie 2 vers la chambre aval 11 qui communique elle-même par un orifice de sortie 21 avec la chambre de combustion principale du moteur-fusée, non représentée.

Les allumeurs acoustiques de l'art antérieur ne sont pas optimisés du point de vue de leur fonctionnement ni de leur géométrie. En particulier, dans un allumeur acoustique tel que celui représenté sur la figure 2, il circule à travers les orifices 2 et la chambre aval 11, avant l'allumage, un courant gazeux froid qui est en contact avec la paroi externe du résonateur acoustique 5. Ceci contribue à réduire le développement de chaleur à l'intérieur du résonateur acoustique 5 et conduit à augmenter le temps nécessaire à l'allumage. La stabilité de la combustion n'est pas très bonne et compte tenu de la faible température initiale du composant gazeux, l'allumage ne présente pas la fiabilité souhaitable.

On connaît encore par le document du Brevet SU-A-1 657 883 un allumeur acoustique ou allumeur dynamique à gaz qui est illustré sur la figure 3 et dans lequel le gaz combustible et l'agent oxydant sont injectés dans une chambre de précombustion 10 par un injecteur 4 et une tuyère d'injection 3 concentriques disposés en regard d'un résonateur acoustique 5 monté sur une paroi opposée de la chambre de précombustion 1, le mélange gazeux s'échappant de la chambre de précombustion par au moins un orifice 20 situé latéralement par rapport à l'ensemble d'injection de gaz 3, 4 et au résonateur acoustique 5. Le fonctionnement de cet allumeur acoustique est amélioré du fait que l'injecteur 4 de gaz combustible débouche dans la partie convergente de la tuyère d'injection 3, en amont de la sortie de cette tuyère d'injection 3, ce qui favorise l'homogénéisation du mélange et accroît la stabilité du processus d'allumage. L'allumeur acoustique de la figure 3 ne présente toutefois toujours pas une fiabilité suffisante et notamment ne permet pas de réduire au maximum le temps nécessaire à l'allumage.

### Objet et description succincte de l'invention.

La présente invention vise à remédier aux inconvénients mentionnés ci-dessus, et en particulier à réaliser un allumeur acoustique présentant une plus grande intensité d'oscillations dues aux ondes de choc, des pertes thermiques plus réduites au niveau du résonateur acoustique et, d'une façon générale, un fonctionnement optimisé plus stable et plus fiable que les dispositifs existants, qui contribue en particulier à réduire le temps nécessaire à l'allumage.

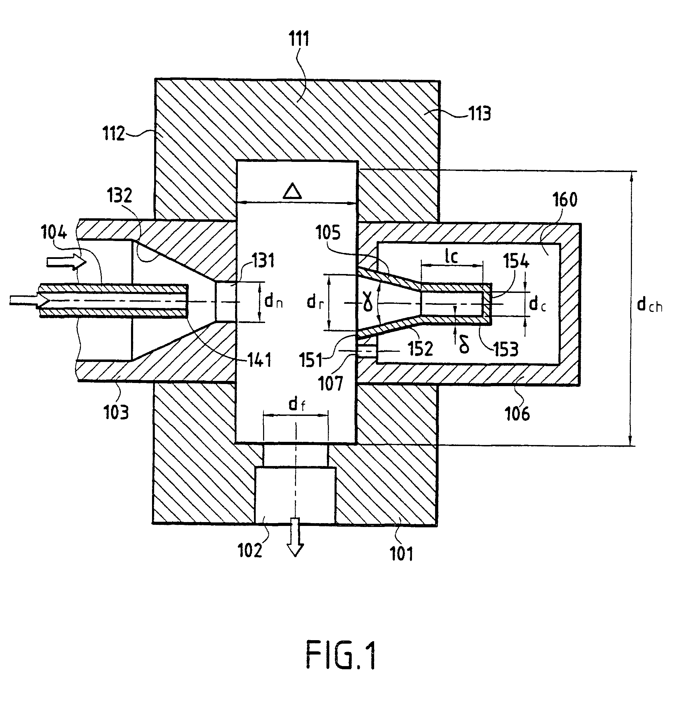

Ces buts sont atteints grâce à un allumeur acoustique (figure 1) pour l'allumage d'un mélange d'ergols dans la chambre de combustion d'un moteur-fusée à ergols liquides, comprenant une chambre de précombustion cylindrique comprenant une paroi cylindrique et des première et deuxième parois d'extrémité, une tuyère d'injection d'ergols débouchant dans la chambre de précombustion à travers la première paroi d'extrémité par un orifice de diamètre minimum dₙ, un injecteur d'ergol combustible disposé à l'intérieur de ladite tuyère selon l'axe de celle-ci, au moins un orifice de sortie de diamètre minimum d_{f}, ménagé dans la paroi cylindrique, et un résonateur acoustique définissant une cavité débouchant dans la chambre de précombustion en regard de la tuyère, à travers la deuxième paroi d'extrémité, par une ouverture de diamètre d_{R}, caractérisé en ce que le résonateur acoustique est entouré par un carter qui définit autour du résonateur acoustique une chambre auxiliaire fermée dont l'intérieur n'est en communication qu'avec la chambre de précombustion par au moins un conduit.

Selon une caractéristique préférentielle, le résonateur acoustique présente, à partir de son ouverture, une partie convergente essentiellement tronconique prolongée par une partie cylindrique de diamètre interne d_{c} fermée par une paroi de fond essentiellement parallèle à la deuxième paroi d'extrémité de la chambre de précombustion, et la paroi de la partie cylindrique du résonateur acoustique est réalisée en un matériau métallique présentant une conductivité thermique λ qui est inférieure à 25 W/m.°C, l'épaisseur δ de ladite paroi cylindrique étant inférieure à 0,1 d_{c}.

Avantageusement, la partie convergente du résonateur acoustique présente un angle de convergence γ compris entre 10 et 24° et la partie cylindrique du résonateur acoustique présente un diamètre interne d_{c} compris entre 0,15 et 0,35 fois le diamètre d_{R} de l'ouverture du résonateur acoustique et une longueur I_{c} comprise entre une et trois fois le diamètre d_{R} de cette ouverture.

Selon un mode de réalisation optimisé, la chambre de précombustion présente un diamètre d_{ch} supérieur à 2,2 dₙ, la distance Δ entre l'orifice de la tuyère et l'ouverture du résonateur acoustique est comprise entre 1,5 dₙ et 3,2 dₙ, le diamètre d_{R} de l'ouverture du résonateur acoustique est compris entre 1,1 dₙ et 1,6 dₙ, et le diamètre minimum d_{f} de l'orifice de sortie est compris entre 2,0 dₙ/√n et 2,8 dₙ/√n, où n représente le nombre d'orifices de sortie et dₙ représente le diamètre de l'orifice de la tuyère.

De préférence, l'extrémité aval de l'injecteur d'ergol combustible est située dans une partie convergente de la tuyère.

L'invention a également pour objet un procédé d'allumage à l'aide d'un allumeur acoustique selon l'invention, caractérisé en ce qu'il consiste dans une première étape à introduire sous pression un gaz neutre à travers la tuyère de telle sorte qu'une partie au moins du jet de gaz neutre détendu à la sortie de la tuyère est introduite dans le résonateur acoustique par l'ouverture pour être échauffée par les oscillations dues aux ondes de choc jusqu'à une température qui permette l'allumage d'un mélange d'ergols introduit lors d'une deuxième étape, et dans cette deuxième étape, lorsque ladite température est atteinte, à introduire un ergol oxydant à travers la tuyère et un ergol combustible à travers l'injecteur pour former avec le gaz neutre un mélange d'ergols qui pénètre à l'intérieur du résonateur acoustique pour prendre feu au contact des gaz chauds et créer une flamme assurant ensuite l'allumage du mélange d'ergols dans l'ensemble de la chambre de précombustion.

Le gaz neutre peut être de l'azote ou, de préférence, de l'hélium.

A titre d'exemple, l'ergol oxydant peut être de l'oxygène et l'ergol combustible peut être de l'hydrogène.

Selon un mode particulier de réalisation, lors de la deuxième étape, l'ergol oxydant et l'ergol combustible sont injectés simultanément respectivement à travers la tuyère et l'injecteur.

Selon un autre mode de réalisation particulier de réalisation, lors de la deuxième étape, l'ergol oxydant et l'ergol combustible sont injectés en alternance respectivement à travers la tuyère et l'injecteur.

### Brève description des dessins.

D'autres caractéristiques et avantages de l'invention ressortiront de la description suivante de modes particuliers de réalisation, donnés à titre d'exemples, en référence aux dessins annexés, sur lesquels :
- la figure 1 est une vue en coupe axiale d'un allumeur acoustique conforme à la présente invention,
- la figure 2 est une vue, en coupe axiale, d'un premier type d'allumeur de l'art antérieur et
- la figure 3 est une vue, en coupe axiale, d'un deuxième type d'allumeur de l'art antérieur.

### Description détaillée de modes particuliers de réalisation.

On se référera à la figure 1 sur laquelle est représenté un exemple d'allumeur acoustique selon l'invention. Cet allumeur acoustique comprend une chambre cylindrique 1 de précombustion comportant une paroi cylindrique 111 et des parois d'extrémité essentiellement planes 112, 113. Un ou plusieurs orifices de sortie 102 présentant chacun un diamètre minimum d_{f}, sont ménagés dans la paroi cylindrique 111. Une tuyère 103 d'injection d'ergols débouche dans la chambre de précombustion 101, à travers la paroi 112, par un orifice 131 de diamètre minimum dₙ. Un tube 104 d'injection d'un ergol combustible est disposé à l'intérieur de la tuyère 103, selon l'axe de celle-ci et présente une extrémité aval 141 située dans la partie convergente 132 de la tuyère 103. Un résonateur acoustique 105 définit une cavité débouchant dans la chambre 101, à travers la paroi 113, par une ouverture 151 de diamètre dᵣ.

Le fait que l'extrémité du tube 104 formant injecteur se termine à l'intérieur de la tuyère 103, au niveau de la partie convergente 132, et en retrait par rapport à l'orifice 131, permet d'effectuer un meilleur mélange de gaz avant l'allumage et évite de perturber la structure des ondes de choc créées avant l'allumage entre la tuyère 103 et le résonateur 105. La position en retrait de l'extrémité aval de l'injecteur 104 permet en outre d'éviter un allumage discontinu ou l'apparition d'explosions au sein de la chambre 101.

Les ondes de choc créées au sein du résonateur acoustique 105 creux sont d'autant plus intenses que ce résonateur présente, à partir de son ouverture 151, une partie convergente 152 essentiellement tronconique, prolongée par une partie cylindrique 153, de diamètre interne d_{c}, fermée par une paroi de fond 154 essentiellement parallèle aux parois d'extrémité 112, 113, de la chambre 101.

Selon l'invention, le fonctionnement du résonateur acoustique 105 est amélioré, du fait que celui-ci est entouré par un carter 106 qui définit autour du résonateur 105 une chambre auxiliaire 160 fermée dont l'intérieur n'est en communication qu'avec la chambre de précombustion 101 par un ou plusieurs conduits 107 de faible section. Un espace libre est ménagé dans la chambre auxiliaire 160 entre la paroi de celle-ci et la paroi extérieure du résonateur 105. Le carter 106 empêche que la chaleur créée au sein du résonateur 105 soit dissipée vers l'environnement extérieur. Le ou les conduits 107 permettent aux oscillations acoustiques de pénétrer à l'intérieur du carter 106, ce qui permet un échauffement du gaz additionnel ayant pénétré dans l'espace libre entre la paroi du carter 106 et celle du résonateur 105. Ceci conduit à réduire le temps nécessaire à l'allumage.

La partie cylindrique 153 du résonateur 105 est réalisée en un matériau métallique présentant une conductivité thermique λ qui est inférieure à 25 W/m.°C. L'épaisseur de la paroi de cette partie cylindrique 153 est de préférence inférieure à 0,1 d_{c} où d_{c} est le diamètre inteme de la partie cylindrique 153. L'utilisation de parois métalliques favorise la réflexion des ondes de choc et accroît la résistance mécanique aux efforts exercés de façon cyclique. Le choix d'une épaisseur réduite et d'une faible conductivité thermique permet de diminuer l'énergie nécessaire pour échauffer les parois avant l'instant d'allumage et empêche l'apparition d'un flux de chaleur significatif le long du résonateur entre le fond chaud de la partie cylindrique 153 du résonateur 105 et l'ouverture d'entrée froide 151 de la partie convergente 152 du résonateur 105. Ceci contribue à réduire le temps nécessaire à l'allumage.

Le temps nécessaire à l'allumage est d'autant plus réduit que les caractéristiques géométriques du résonateur 105 sont optimisées. Ainsi, il a été observé qu'en pratique les oscillations dues aux ondes de choc à l'intérieur du résonateur 105 sont intensifiées si l'on adopte les valeurs suivantes pour les différents paramètres définissant le résonateur 105 :
- angle de convergence γ de la partie convergente 152 compris entre 10 et 24°.
- diamètre inteme de la partie tubulaire cylindrique 153 compris entre 0,15 dᵣ et 0,35 dᵣ.
- longueur de la partie tubulaire cylindrique 153 comprise entre dᵣ et 3 dᵣ,
où dᵣ désigne le diamètre de l'ouverture d'entrée 151 du résonateur 105.

Par ailleurs, les oscillations des ondes de choc dans le résonateur 105 sont favorisées si l'on adopte pour les divers paramètres définissant la structure d'ensemble de l'allumeur, des valeurs déterminées de la façon suivante :
- le diamètre d_{ch} de la chambre de précombustion 101 est supérieur à 2,2 dₙ.
- la distance Δ entre l'orifice 131 de la tuyère 103 et l'ouverture 151 du résonateur 105 est comprise entre 1,5 dₙ et 3,2 dₙ.
- le diamètre dᵣ de l'ouverture 151 du résonateur 105 est compris entre 1,1 dₙ et 1,6 dₙ, et
- le diamètre minimum d_{f} de l'orifice de sortie 102 est compris entre 2,0 dₙ/√n et 2,8 dₙ /√n,
où n représente le nombre d'orifices de sortie 102 et dₙ représente le diamètre de l'orifice 131 de la tuyère 103.

L'invention conceme encore un procédé d'allumage et de production de flamme à l'aide d'un allumeur acoustique du type décrit plus haut, lequel procédé contribue à la fois à réduire le temps nécessaire avant l'apparition de l'allumage et à prolonger et stabiliser l'inflammation produite au moment de l'allumage.

Selon ce procédé, dans une première étape, on introduit sous pression un gaz neutre à travers la tuyère 103 de telle sorte qu'une partie au moins du jet de gaz neutre détendu à la sortie de la tuyère 103 est introduite dans le résonateur 105 par l'ouverture 151 pour être échauffée très fortement par les oscillations dues aux ondes de choc.

Dans une deuxième étape, on injecte en plus du gaz neutre un ergol oxydant à travers la tuyère 103 et un ergol combustible à travers l'injecteur 104. Ce mélange de gaz s'enflamme aux contacts des parois chaudes du résonateur et du gaz neutre échauffé, et crée une flamme qui se propage dans la chambre de précombustion 101, puis par passage à travers le ou les orifices de sortie 102, le jet de flamme est dirigé vers la chambre de combustion principale (non représentée) pour assurer l'allumage de l'ergol principal d'un moteur-fusée.

La mise en oeuvre d'un gaz neutre diminue la température de la combustion et permet ainsi d'augmenter la durée de vie de l'injecteur 104 ainsi que la durée et la stabilité de la flamme créée.

Le gaz neutre peut être constitué par exemple par de l'azote ou de préférence par de l'hélium qui permet de réduire de façon plus sensible le temps nécessaire avant l'allumage.

Lors de la deuxième étape de la mise en oeuvre du procédé, selon un premier mode de réalisation, l'ergol oxydant, tel que de l'oxygène et l'ergol combustible tel que de l'hydrogène, sont injectés simultanément respectivement à travers la tuyère 103 et l'injecteur 102.

Selon un autre mode de réalisation, lors de cette deuxième étape, l'ergol oxydant et l'ergol combustible sont injectés en alternance respectivement à travers la tuyère 103 et l'injecteur 102.

## Revendications

1. Allumeur acoustique pour l'allumage d'un mélange d'ergols dans la chambre de combustion d'un moteur-fusée à ergols liquides, comprenant une chambre de précombustion (101) cylindrique comprenant une paroi cylindrique (111) et des première et deuxième parois d'extrémité (112, 113), une tuyère (103) d'injection d'ergols débouchant dans la chambre de précombustion (101) à travers la première paroi d'extrémité (112) par un orifice (131) de diamètre minimum dₙ, un injecteur (104) d'ergol combustible disposé à l'intérieur de ladite tuyère (103) selon l'axe de celle-ci, au moins un orifice de sortie (102) de diamètre minimum d_{f}, ménagé dans la paroi cylindrique (111), et un résonateur acoustique (105) définissant une cavité débouchant dans la chambre de précombustion (101) en regard de la tuyère (103), à travers la deuxième paroi d'extrémité (113), par une ouverture (151) de diamètre dᵣ,
**caractérisé en ce que** le résonateur acoustique (105) est entouré par un carter (106) qui définit autour du résonateur acoustique (105) une chambre auxiliaire (160) fermée dont l'intérieur n'est en communication qu'avec la chambre de précombustion (101) par au moins un conduit (107).

2. Allumeur acoustique selon la revendication 1, **caractérisé en ce que** le résonateur acoustique (105) présente, à partir de son ouverture (151), une partie convergente (152) essentiellement tronconique prolongée par une partie cylindrique (153) de diamètre interne d_{c} fermée par une paroi de fond (154) essentiellement parallèle à la deuxième paroi d'extrémité (113) de la chambre de précombustion (101), et **en ce que** la paroi de la partie cylindrique (153) du résonateur acoustique (105) est réalisée en un matériau métallique présentant une conductivité thermique λ qui est inférieure à 25 W/m.°C, l'épaisseur δ de ladite paroi cylindrique (153) étant inférieure à 0,1 d_{c}.

3. Allumeur acoustique selon la revendication 2, **caractérisé en ce que** la partie convergente (152) du résonateur acoustique (105) présente un angle de convergence γ compris entre 10 et 24° et **en ce que** la partie cylindrique (153) du résonateur acoustique (105) présente un diamètre interne d_{c} compris entre 0,15 et 0,35 fois le diamètre dᵣ de l'ouverture (151) du résonateur acoustique (105), et une longueur I_{c} comprise entre une et trois fois le diamètre dᵣ de cette ouverture (151).

4. Allumeur acoustique selon l'une quelconque des revendications 1 à 3, **caractérisé en ce que** la chambre de précombustion (101) présente un diamètre d_{ch} supérieur à 2,2 dₙ, **en ce que** la distance Δ entre l'orifice (131) de la tuyère (103) et l'ouverture (151) du résonateur acoustique (105) est comprise entre 1,5 dₙ et 3,2 dₙ, **en ce que** le diamètre dᵣ de l'ouverture (151) du résonateur acoustique (105) est compris entre 1,1 dₙ et 1,6 dₙ, et **en ce que** le diamètre minimum d_{f} de l'orifice de sortie (102) est compris entre 2,0 dₙ/√n et 2,8 dₙ/√n, où n représente le nombre d'orifices de sortie (102) et dₙ représente le diamètre de l'orifice (131) de la tuyère (103).

5. Allumeur acoustique selon l'une quelconque des revendications 1 à 4, **caractérisé en ce que** l'extrémité aval (141) de l'injecteur (104) d'ergol combustible est située dans une partie convergente (132) de la tuyère (103).

6. Procédé d'allumage à l'aide de l'allumeur acoustique selon l'une quelconque des revendications 1 à 5, **caractérisé en ce qu'**il consiste dans une première étape à introduire sous pression un gaz neutre à travers la tuyère (103) de telle sorte qu'une partie au moins du jet de gaz neutre détendu à la sortie de la tuyère (103) est introduite dans le résonateur acoustique (105) par l'ouverture (151) pour être échauffée par les oscillations dues aux ondes de choc jusqu'à une température qui permette l'allumage d'un mélange d'ergols introduit lors d'une deuxième étape, et dans cette deuxième étape, lorsque ladite température est atteinte, à introduire un ergol oxydant à travers la tuyère (103) et un ergol combustible à travers l'injecteur (104) pour former avec le gaz neutre un mélange d'ergols qui pénètre à l'intérieur du résonateur acoustique (105) pour prendre feu au contact des gaz chauds et créer une flamme assurant ensuite l'allumage du mélange d'ergols dans l'ensemble de la chambre de précombustion (101).

7. Procédé selon la revendication 6, **caractérisé en ce que** le gaz neutre est de l'hélium.

8. Procédé selon la revendication 6, **caractérisé en ce que** le gaz neutre est de l'azote.

9. Procédé selon l'une quelconque des revendications 6 à 8, **caractérisé en ce que** l'ergol oxydant est de l'oxygène et l'ergol combustible est de l'hydrogène.

10. Procédé selon l'une quelconque des revendications 6 à 9, **caractérisé en ce que** lors de la deuxième étape, l'ergol oxydant et l'ergol combustible sont injectés simultanément respectivement à travers la tuyère (103) et l'injecteur (102).

11. Procédé selon l'une quelconque des revendications 6 à 9, **caractérisé en ce que** lors de la deuxième étape, l'ergol oxydant et l'ergol combustible sont injectés en alternance respectivement à travers la tuyère (103) et l'injecteur (102).

## Claims

1. An acoustic igniter for igniting a mixture of propellents in the combustion chamber of a liquid propellent rocket engine, the igniter comprising a cylindrical precombustion chamber (101) having a cylindrical wall (111) and first and second end walls (112, 113), a propellent injection nozzle (103) opening out into the precombustion chamber (101) through the first end wall (112) via an orifice (131) of minimum diameter dₙ, a fuel injector (104) disposed inside said nozzle (103) on the axis thereof, at least one outlet orifice (102) of minimum diameter d_{f}, formed through the cylindrical wall (111), and an acoustic resonator (105) defining a cavity opening out into the precombustion chamber (101) opposite the nozzle (103) through the second end wall (113) via an opening (151) of diameter dᵣ,
the igniter being **characterised in that** the acoustic resonator (105) is surrounded by a housing (106) which defines an auxiliary chamber (160) around the acoustic resonator (105), the auxiliary chamber being closed with the inside thereof being in communication only with the precombustion chamber (101) via at least one duct (107).

2. An acoustic igniter according to claim 1, **characterised in that** the acoustic resonator (105) presents, running from its opening (151): an essentially frustoconical converging portion (152) extended by a cylindrical portion (153) of inside diameter d_{c} and closed by an end wall (154) that is essentially parallel to the second end wall (113) of the precombustion chamber (101), and **in that** the wall of the cylindrical portion (153) of the acoustic resonator (105) is made of a metal material having thermal conductivity λ which is less than 25 W/m.°C, with the thickness δ of said cylindrical wall (153) being less than 0.1 d_{c}.

3. An acoustic igniter according to claim 2, **characterised in that** the converging portion (152) of the acoustic resonator (105) has a convergence angle γ lying in the range 10° to 24° and **in that** the cylindrical portion (153) of the acoustic resonator (105) has an inside diameter d_{c} lying in the range 0.15 to 0.35 times the diameter dᵣ of the opening (151) of the acoustic resonator (105), and a length I_{c} lying in the range one to three times the diameter dᵣ of said opening (151).

4. An acoustic igniter according to any one of claims 1 to 3, **characterised in that** the precombustion chamber (101) has a diameter d_{ch} greater than 2.2dₙ, **in that** the distance Δ between the orifice (131) of the nozzle (103) and the opening (151) of the acoustic resonator (105) lies in the range 1.5dₙ to 3.2dₙ, **in that** the diameter dᵣ of the opening (151) of the acoustic resonator (105) lies in the range 1.1dₙ to 1.6dₙ, and **in that** the minimum diameter d_{f} of the outlet orifice (102) lies in the range 2.0dₙ/√n to 2.8dₙ/√n, where n represents the number of outlet orifices (102) and dₙ represents the diameter of the orifice (131) of the nozzle (103).

5. An acoustic igniter according to any one of claims 1 to 4, **characterised in that** the downstream end (141) of the fuel injector (104) is situated in the converging portion (132) of the nozzle (103).

6. A method of ignition using the acoustic igniter according to any one of claims 1 to 5, **characterised in that** it consists in a first step of injecting an inert gas under pressure via the nozzle (103) so that at least a portion of the jet of expanded inert gas at the outlet from the nozzle (103) penetrates into the acoustic resonator (105) via its opening (151) to be heated by oscillations due to shock waves until it reaches a temperature suitable for igniting a propellent mixture that is injected during a second step, and in said second step, once said temperature has been reached, the method consists in injecting oxidizer through the nozzle (103) and fuel through the injector (104) to co-operate with the inert gas to form a propellent mixture which penetrates into the acoustic resonator (105) to catch fire on contact with the hot gases and create a flame that then ignites the propellent mixture throughout the precombustion chamber (101).

7. A method according to claim 6, **characterised in that** the inert gas is helium.

8. A method according to claim 6, **characterised in that** the inert gas is nitrogen.

9. A method according to any one of claims 6 to 8, **characterised in that** the oxidizer is oxygen and the fuel is hydrogen.

10. A method according to any one of claims 6 to 9, **characterised in that**, during the second step, the oxidizer and the fuel are injected simultaneously respectively through the nozzle (103) and the injector (102).

11. A method according to any one of claims 6 to 9, **characterised in that** during the second step, the oxidizer and the fuel are injected in altemation respectively through the nozzle (103) and through the injector (102).

## Patentansprüche

1. Akustische Zündvorrichtung zum Zünden eines Gemisches von Treibstoffen in der Verbrennungskammer eines Flüssigtreibstoffraketenmotors, die eine zylindrische Vorverbrennungskammer (101) aufweist, die aufweist: eine zylindrische Wandung (111) und eine erste und eine zweite Stirnwandung (112, 113), eine durch die erste Stirnwandung (112) durch eine Öffnung (131) mit einem Mindestdurchmesser dₙ in die Vorverbrennungskammer (101) einmündende Treibstoffeinspeisdüse (103), einen innerhalb der Düse (103) entsprechend deren Achse angeordneten Verbrennungstreibstoffinjektor (104), zumindest eine in der zylindrischen Wandung (111) vorgesehene Austrittsöffnung. (102) mit einem Mindestdurchmesser d_{f}, und einen akustischen Resonator (105), der eine durch eine Öffnung (151) mit einem Durchmesser dᵣ durch die zweite Stirnwandung (113) in die Vorverbrennungskammer (101) gegenüber der Düse (103) einmündende Ausnehmung definiert, **dadurch gekennzeichnet, dass** der akustische Resonator von einem Gehäuse (106) umgeben ist, das eine geschlossene Hilfskammer (160) um den akustischen Resonator (105) abgrenzt, deren Inneres durch zumindest eine Leitung nur mit der Vorverbrennungskammer (101) in Verbindung ist.

2. Akustische Zündvorrichtung nach Anspruch 1, **dadurch gekennzeichnet, dass** der akustische Resonator (105) aufweist: einen ausgehend von seiner Öffnung (151) konvergierenden, im wesentlichen kegelstumpfartigen Teil, der durch einen zylindrischen Teil (153) mit einem inneren Durchmesser d_{c} verlängert wird, der durch eine Bodenwandung (154) geschlossen ist, die im wesentlichen zur zweiten Stirnwandung (113) der Vorverbrennungskammer (101) parallel ist, und dass die Wandung des zylindrischen Teiles (153) des akustischen Resonators (105) aus einem metallischen Werkstoff verwirklicht ist, der eine thermische Leitfähigkeit λ aufweist, die kleiner als 25 W/m°C ist, wobei die Dicke δ der zylindrischen Wandung (153) geringer als 0,1 d_{c} ist.

3. Akustische Zündvorrichtung nach Anspruch 2, **dadurch gekennzeichnet, dass** der konvergierende Teil (152) des akustischen Resonators (105) einen Konvergenzwinkel γ zwischen 10 und 24° aufweist und dass der zylindrische Teil (153) des akustischen Resonators (105) einen inneren Durchmesser zwischen 0,15 und 0,35 mal dem Durchmesser dᵣ der Öffnung (151) des akustischen Resonators (105) und eine Länge I_{c} zwischen ein und drei mal dem Durchmesser dᵣ der Öffnung (151) aufweist.

4. Akustische Zündvorrichtung nach einem der Ansprüche 1 bis 3, **dadurch gekennzeichnet, dass** die Vorverbrennungskammer (101) einen Durchmesser d_{ch} größer als 2,2 dₙ aufweist, dass der Abstand Δ zwischen der Öffnung (131) der Düse (103) und der Öffnung (151) des akustischen Resonators (105) zwischen 1,5 dₙ und 3,2 dₙ beträgt, dass der Durchmesser dᵣ der Öffnung (151) des akustischen Resonators (105) zwischen 1,1 dₙ und 1,6 dₙ beträgt, und dass der Mindestdurchmesser dᵣ der Austrittsöffnung (102) zwischen 2,0 dₙ/√n und 2,8 dₙ/√n beträgt, wobei n die Anzahl von Austrittsöffnungen (102) wiedergibt und dₙ den Durchmesser der Öffnung (131) der Düse (103) wiedergibt.

5. Akustische Zündvorrichtung nach einem der Ansprüche 1 bis 4, **dadurch gekennzeichnet, dass** das stromabseitige Ende des Verbrennungstreibstoffinjektors (104) in einem konvergierenden Teil (132) der Düse (103) angeordnet ist.

6. Verfahren zum Zünden mit Hilfe einer akustischen Zündvorrichtung nach einem der Ansprüche 1 bis 5, **dadurch gekennzeichnet, dass** es besteht aus einem ersten Schritt des Einleitens unter Druck eines neutralen Gases durch die Düse (103), so dass zumindest ein Teil des Strahles des an dem Austritt der Düse (103) ausgedehnten neutralen Gases durch die Öffnung (151) in den akustischen Resonator (105) eingeleitet wird, um durch die auf die Stoßwellen zurückgehenden Oszillationen bis auf eine Temperatur erwärmt zu werden, die das Zünden eines Gemisches von Treibstoffen ermöglicht, das in einem zweiten Schritt eingeführt wird, und aus dem zweiten Schritt des Einleitens, wenn besagte Temperatur erreicht ist, eines oxidierenden Treibstoffes durch die Düse (103) und eines Verbrennungstreibstoffes durch den Injektor (104) zum Ausbilden eines Gemisches von Treibstoffen mit dem neutralen Gas, das zum Feuerfangen bei Kontakt mit den heißen Gasen und Schaffen einer Flamme, die anschließend das Zünden des Gemisches von Treibstoffen in der Gesamtheit der Vorverbrennungskammer (101) sicherstellt, in das Innere des akustischen Resonators (105) eindringt.

7. Verfahren nach Anspruch 6, **dadurch gekennzeichnet, dass** das neutrale Gas Helium ist.

8. Verfahren nach Anspruch 6, **dadurch gekennzeichnet, dass** das neutrale Gas Stickstoff ist.

9. Verfahren nach einem der Ansprüche 6 bis 8, **dadurch gekennzeichnet, dass** der oxidierende Treibstoff Sauerstoff und der Verbrennungstreibstoff Wasserstoff ist.

10. Verfahren nach einem der Ansprüche 6 bis 9, **dadurch gekennzeichnet, dass** beim zweiten Schritt der oxidierende Treibstoff und der Verbrennungstreibstoff gleichzeitig jeweils durch die Düse (103) bzw. den Injektor (102) eingespeist werden.

11. Verfahren nach einem der Ansprüche 6 bis 9, **dadurch gekennzeichnet, dass** beim zweiten Schritt der oxidierende Treibstoff und der Verbrennungstreibstoff jeweils abwechselnd durch die Düse (103) und den Injektor (102) eingespeist werden.
